# EUROPÄISCHE PATENTSCHRIFT

(11) **EP 1 498 034 B1**
(45) Veröffentlichungstag und Bekanntmachung des Hinweises auf die Patenterteilung: **02.08.2006**
(21) Anmeldenummer: 04016499.8
(22) Anmeldetag: 13.07.2004
(51) Int. Cl.: A22C 11/00, B65G 47/61

(54) **Vorrichtung zum Aufnehmen und Führen von Schlaufen**
Device for holding and guiding loops
Dispositif pour recevoir et guider des boucles

(30) Priorität: 16.07.2003 DE 10332330
(43) Veröffentlichungstag der Anmeldung: 19.01.2005
(73) Patentinhaber: Poly-clip System GmbH & Co. KG, 60489 Frankfurt am Main (DE)
(72) Erfinder: Sames, Jörg, 35418 Alten Büseck (DE)
(74) Vertreter: Eisenführ, Speiser & Partner

(56) Entgegenhaltungen:
- DE-C- 3 806 467
- US-A- 4 612 684

## Beschreibung

Die Erfindung bezieht sich auf eine Vorrichtung zum Aufnehmen und Führen von an Gegenständen, insbesondere wurstförmigen Verpackungen, anbringbaren Schlaufen (Schlaufenaufnahme) oder dergleichen gemäss Oberbegriff des Anspruchs 1.

In der Wurstproduktion ist es bekanntermaßen üblich, dass die Füllung einer zu bildenden Wurst über ein Füllrohr in ein einseitig verschlossenes schlauchoder beutelartiges Verpackungsmaterial gefördert wird. Nach Abschluss des Füllvorgangs wird mittels zweier sog. Verdrängerbleche ein füllgutfreier Zopfabschnitt gebildet. Auf diesem Zopfabschnitt werden so dann zwei Verschlussmittel, sog. Clips, angebracht, welche das Verpackungsmaterial auf beiden Seiten des Zopfabschnitts verschließen. Danach wird dieser durchtrennt. Soll die Wurst später z.B. zum Zweck des Räücherns oder der Aufbewahrung aufgehängt werden, wird z.B. eine Aufhängeschlaufe zugeführt dergestalt, dass sie beim Setzen des Clips von diesem umschlossen und somit an der Wurst befestigt wird.

Unter Schlaufen sind im Sinne dieser Erfindung alle zumindest teilweise flexiblen Mittel zu verstehen, an denen sich Gegenstände aufhängen lassen.

Viele Wurstprodukte werden nachfolgend beispielsweise in einer Rauchkammer weiter verarbeitet. Hierzu müssen die Würste an ihren Schlaufen vereinzelt so aufgehängt werden, dass sie sich nach Möglichkeit nicht berühren. Der Automatisierungsgrad ist auf diesem Gebiet der Technik nicht sehr weit fortgeschritten, so dass heute noch Rauchstäbe von Hand mit Würsten bestückt werden.

Eine Ausnahme bildet die aus der DE 34 37 830 bzw. DE 38 06 467 bekannte, eingangs genannte Vorrichtung, mittels der die Schlaufen von dem Aufnehmer, der beispielsweise die Form eines Dorns oder Schwerts aufweist, automatisch und sicher gefangen werden. Um eine entsprechende Zwangsführung zu gewährleisten, tritt der von unten an den Aufnehmer heranfahrbare Bolzen oder Stift mit dessen vorderen Ende in Kontakt, sobald eine zugeführte Schlaufe dergestalt positioniert ist, dass der Bolzen diese bei seiner Bewegung in die Kontaktstellung (erste Stellung) durchdringt. Die Halteschlaufe wird dann durch eine Abwärtsbewegung der an der Schlaufe hängenden Wurst über eine Umlenkrolle auf den Aufnehmer aufgezogen. Der Aufnehmer ist an seinem hinteren Ende an einer in der vertikalen Ebene umlaufenden Endloskette drehbar angelenkt, an die die Schlaufe über einen pneumatisch längs des Aufnehmers. bewegbaren Schlitten übergeben wird. Ist die Kette über einen bestimmten Bereich ihrer Gesamtlänge befüllt, so wird eine 180°-Schwenkbewegung des Kettenantriebs um dessen Längsachse veranlasst, wodurch ein die vormals untere Hälfte der Kette umschließender Rauchstab nach oben geschwenkt wird, so dass die Schlaufen von der vormals oberen Hälfte der Kette auf den Rauchstab übergeben werden und auf diesem zu liegen kommen. Da sich der Aufnehmer nicht mit dem Kettenantrieb mitbewegen darf, ist er an beidseits des Aufnehmers angeordneten Zylinderkolbenpaaren abgestützt. Dabei steht jeweils nur ein Zylinderkolben jedes Paares mit dem Aufnehmer in Eingriff, während der zweite zurückgezogen ist, um den Weg für die über den Aufnehmer transportierte Schlaufe freizugeben. Nach Auslösen eines Kontaktes gelangt dann der jeweils andere Kolben jedes Paares in Eingriff mit dem Aufnehmer während der erste zur Freigabe des Weges zurückgezogen wird.

Nachteilig bei einer derartigen Vorrichtung ist, dass die Ausgestaltung und Ansteuerung sowohl des Schlittens mit Mitteln zur Übergabe der von dem Aufnehmer angereichten Wurst auf die Kette als auch die der Abstützung des Aufnehmers einen hohen Aufwand erfordern. Ferner verlangsamen deren Bewegungen den Förderprozess.

Aufgabe der Erfindung ist es daher; eine Vorrichtung der eingangs genannten Art bereitzustellen, die einfach in ihrer Ausgestaltung ist und die einen sicheren und beschädigungsfreien Transport der Gegenstände gewährleistet.

Diese Aufgabe wird gelöst durch die im unabhängigen Anspruch 1 angegebenen Kennzeichen.

Mittels einer solchen Drehmomentabstützung wird erreicht, dass der Aufnehmer, während der Bolzen sich in der zweiten Stellung befindet und somit nicht an dem vorderen Ende des Aufnehmers anliegt, gegen ein Verdrehen gesichert ist, insbesondere wenn er - wie aus dem Stand der Technik bekannt - mit seinem hinteren Ende an ein sich in Förderrichtung anschließendes Transportmittel drehbar angelenkt ist. In dieser Phase liegt der Aufnehmer nämlich mit seinem vorderen, gegenüber seinem hinteren Ende abgewinkelten Bereich an der Abstützung an. Wird nun eine Schlaufe eingefädelt, indem der Bolzen in die erste Stellung verfahren wird und dabei die Schlaufe durchsetzt, dienen die an seiner Kontaktfläche befindlichen Mittel zur Zentrierung dazu, den Aufnehmer in eine definierte Position zu bringen und ihn gleichzeitig gegen ein Verdrehen zu sichern.

In dieser Phase übernimmt die Kontaktfläche mit den Mitteln zur Zentrierung die Aufgabe der Drehmomentabstützung. Letztere und der Aufnehmer können daher - gleichzeitig oder zeitversetzt - auseinanderbewegt werden. Dadurch kann die Schlaufe auf dem Dorn entlang gleiten, ohne dass die Drehmomentabstützung deren Transportweg verstellt.

Das Auseinanderbewegen kann auf verschiedene Weise geschehen: Bevorzugt wird die Drehmomentabstützung durch eine den Aufnehmer im Bereich dessen vorderen Endes umgreifende Gabel mit einer Spreizung gebildet, deren Form und Breite so gewählt sind, dass der Aufnehmer nicht an der Gabel anliegt, wenn der Bolzen sich in der ersten Stellung befindet. Die Anlageposition des Aufnehmers an der Drehmomentabstützung ist bei dieser Ausführungsform gegenüber der Zentrierposition des Aufnehmers Versetzt. Durch das während des Heranfahrens des Bolzens an das vordere Ende des Aufnehmers vollzogene Zentrieren wird der Aufnehmer von der Drehmomentabstützung weg geführt. Die Breite der Gabelspreizung wird dabei folglich so gewählt, dass das vordere Ende des Aufnehmers darin genügend Spiel aufweist, so dass die Schlaufe durch den beim Zentrieren beiderseits zwischen dem Aufnehmer und der Gabel entstehenden Spalt hindurchgeführt werden kann.

Gemäß einer anderen Ausführungsform ist die Drehmomentabstützung beweglich ausgestaltet; so dass sie entweder zusammen mit dem Bolzen oder separat während des Heranfahrens des Bolzens an die Dornspitze oder kurz danach aus der Anlageposition des Doms wegfahrbar oder wegschwenkbar ist. Bevorzugt ist die Drehmomentabstützung in Form einer Gabel dabei dergestalt an den Bolzen gekoppelt, dass sie mit dem Bolzen zwischen der ersten und zweiten Stellung bewegbar ist, wobei der Aufnehmer an der Position, in der sich die Gabel befindet, während der Bolzen die erste Stellung erreicht hat, einen geringeren Querschnitt als die Breite der Gabelspreizung aufweist und an der Position, in der sich die Gabel befindet, während der Bolzen die zweite Stellung erreicht hat, einen der Breite der Gabelspreizung entsprechenden Querschnitt aufweist.

Auch durch diese Maßnahme wird, wenn der Bolzen die Schlaufe durchsetzt, ein Spalt beiderseits zwischen dem Aufnehmer und der Gabel gebildet und sichergestellt, dass die Schlaufe an dem Aufnehmer entlang durch diesen Spalt hindurch an der Gabel vorbeigeführt werden kann, ohne an letzterer hängen zu bleiben. Zusätzlich weist diese Ausführungsform den Vorteil auf, dass der Aufnehmer, während sich der Bolzen in der zweiten Stellung befindet, aufgrund des größeren Querschnitts in der Gabel festgeklemmt oder zumindest nahezu spielfrei gehalten wird. Dadurch führt der Aufnehmer beim Zentrieren allenfalls eine geringe seitliche Bewegung aus und die Mittel zur Zentrierung sind weniger verschleißanfällig.

In einer anderen bevorzugten Ausführungsform ist die Drehmomentabstützung - wiederum in Form einer Gabel - mit dem Bolzen um eine gemeinsame Drehachse dergestalt schwenkbar gelagert, dass der Bolzen sich in der ersten Stellung befindet, während die Drehmomentabstützung von dem Aufnehmer weggeschwenkt ist, und dass der Bolzen sich in der zweiten Stellung befindet während die Drehmomentabstützung an den Aufnehmer herangeschwenkt ist. Eine (Schwenk-) Bewegung zwischen der gemeinsamen ersten und der gemeinsamen zweiten Stellung hat gegenüber einer linearen Bewegung den Vorteil, dass bei einer geeigneten Relativanordnung von Bolzen, Gabel und Drehachse und einer geeigneten Gabelspreizung die Gabel von dem Aufnehmer weggeschwenkt ist - und somit den Weg für die Schlaufe freigibt wenn der Bolzen sich in der ersten Stellung befindet, ohne dass der Aufnehmer an einer dem Gabelsitz entsprechenden Stelle verjüngt werden muss. Wird der Bolzen für die Zuführung der nächsten Schlaufe weggeschwenkt, so wird gleichzeitig die Gabel an den Aufnehmer herangeschwenkt und fixiert diesen.

Die gabelförmige Ausgestaltung ist bei diesen Ausführungsbeispielen nicht zwingend vorgeschrieben. Jedoch erweist sie sich als vorteilhaft, da durch sie zugleich die Schlaufe geführt werden kann, während sie, beim Abtransport der daran befestigten Wurst auf den Aufnehmer gezogen wird. Dieser Effekt wird noch verbessert, indem die Gabel an ihrem offenen Ende so aufgebogen ist, dass ein Einfädeln der Schlaufe an der Gabel selbst oder an anderen Vorsprüngen vermieden wird.

In einer bevorzugten Ausführungsform ist die Dornspitze kugelsegmentförmig und die Kontaktfläche weist als Mittel zur Zentrierung eine kugelpfannenförmige Gestalt auf. Alternativ kann die Dornspitze kegelförmig und die Kontaktfläche entsprechend trichterförmig ausgebildet sein.

Der Aufnehmer (in diesem Fall nachfolgend als Dorn bezeichnet) weist bevorzugt einen im Wesentlichen runden Querschnitt auf, der sich von dem vorderen Ende (nachfolgend als Dornspitze bezeichnet) in Richtung auf das diesem entgegengesetzte hintere Ende (dornspitzfernes Ende) aufweitet. Dies ist dann von Nutzen, wenn beispielsweise eine sich an das hintere Ende des Aufnehmers koaxial anschließende Transportwelle, an die die Schlaufe von dem Aufnehmer zum Weitertransport übergeben wird, einen größeren Durchmesser als die Dornspitze aufweist, damit die Schlaufe bei der Übergabe an die Welle nicht an einem Absatz hängen bleibt.

Damit der Dorn beispielsweise an die sich drehende Transportwelle oder eine andere schwenkbare, wie beispielsweise die aus der DE 34 37 830 bekannte Transportvorrichtung angelenkt werden kann, weist er an seinem hinteren Ende ein zu seiner Zentralachse im Wesentlichen koaxiales Drehlager auf.

Weitere Aufgaben, Merkmale und Vorteile der Erfindung werden nun anhand eines Ausführungsbeispiels mit Hilfe der Zeichnungen näher erläutert. Es zeigen:
- Fig. 1: eine Draufsicht auf eine Ausführungsform der erfindungsgemäßen Schlaufenaufnahme;
- Fig. 2: eine Seitenansicht der Schlaufenaufnahme aus Fig. 1, mit einem Stempel in einer ersten, eine zugeführte Schlaufe durchsetzenden Stellung;
- Fig. 3: einer Seitenansicht der Schlaufenaufnahme aus Fig. 1 und 2, bei der sich der Stempel in einer zweiten Stellung befindet;
- Fig. 4: eine Detailansicht einer Drehmomentabstützung gemäß der in den vorangegangen Figuren gezeigten Ausführungsform der Schlaufenaufnahme; und

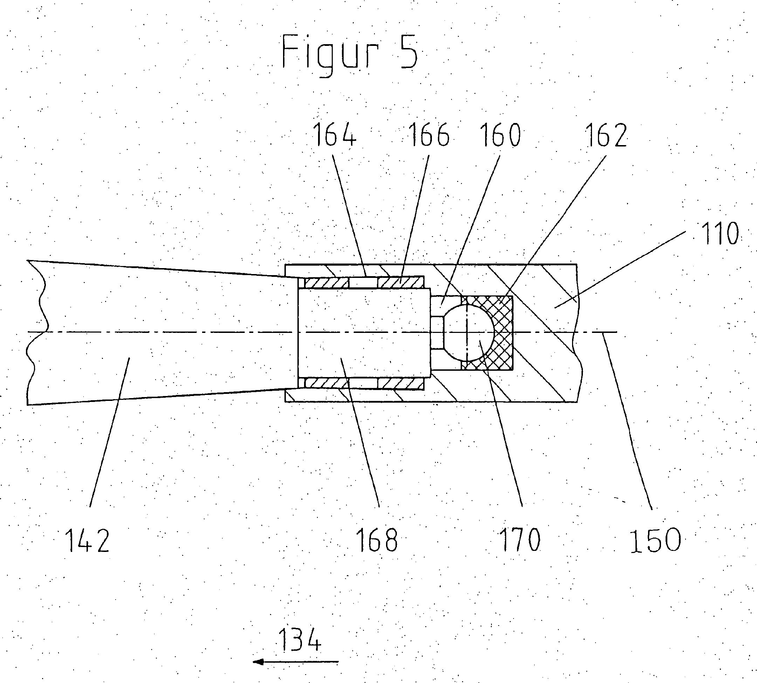

- Fig. 5 eine: Teilschnittdarstellung einer axialen Drehlagerung am abführseitigen Ende der Schlaufenaufnahme.

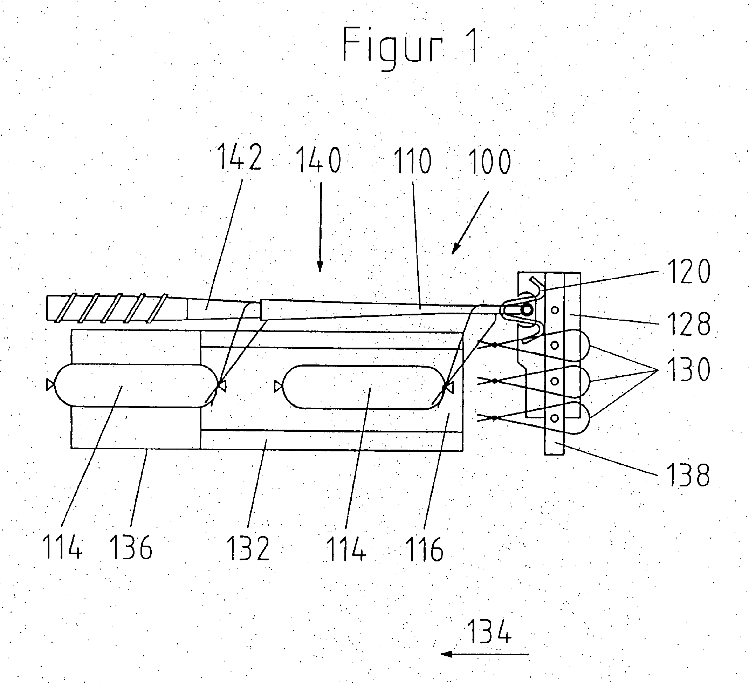

Das in den Fig. 1 bis 3 gezeigte Ausführungsbeispiel einer Schtaufenaufnahme 100 weist einen Aufnehmer oder Dorn 110 mit im Wesentlichen kreisförmigem Querschnitt auf. Dieser Dorn 110 ist in seinem vorderen Bereich 112 bogenförmig nach unten abgewinkelt. Die Kontur des abgewinkelten vorderen Bereichs 112 ist so gewählt, dass beim Aufziehen einer an einer Wurst 114 befestigten Schlaufe 116 dieser ein möglichst geringer Widerstand entgegengesetzt wird, damit die Schlaufe beschädigungsfrei und die Wurst zuverlässig abtransportiert wird.

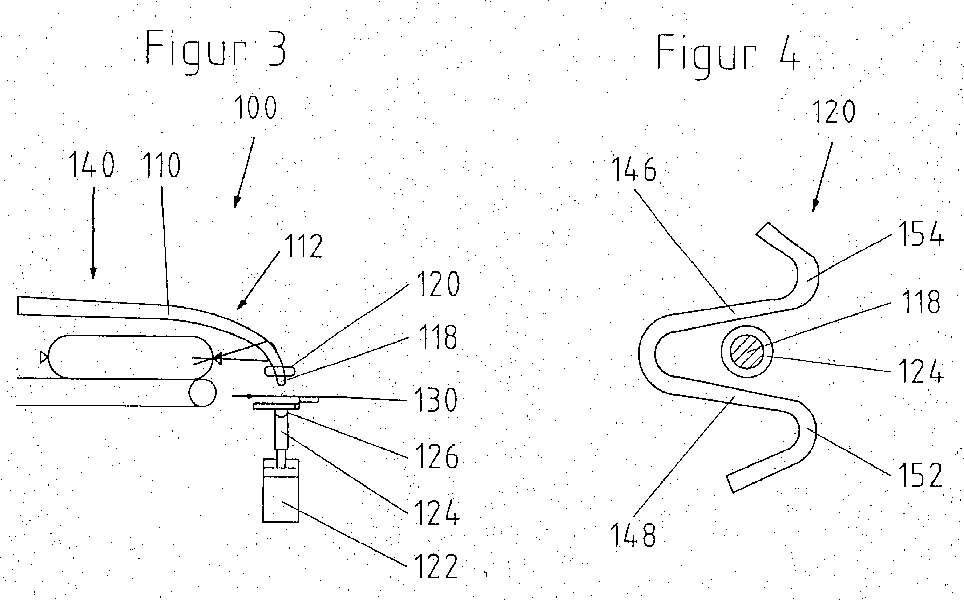

Die Schlaufenaufnahme 100 weist ferner im Bereicht der Dornspitze 118 des Dorns 110 eine gabelförmiggebogene Drehmomentabstützung 120 auf, deren Form und Wirkungsweise unter Bezugnahme auf Fig. 4 weiter unten beschrieben wird.

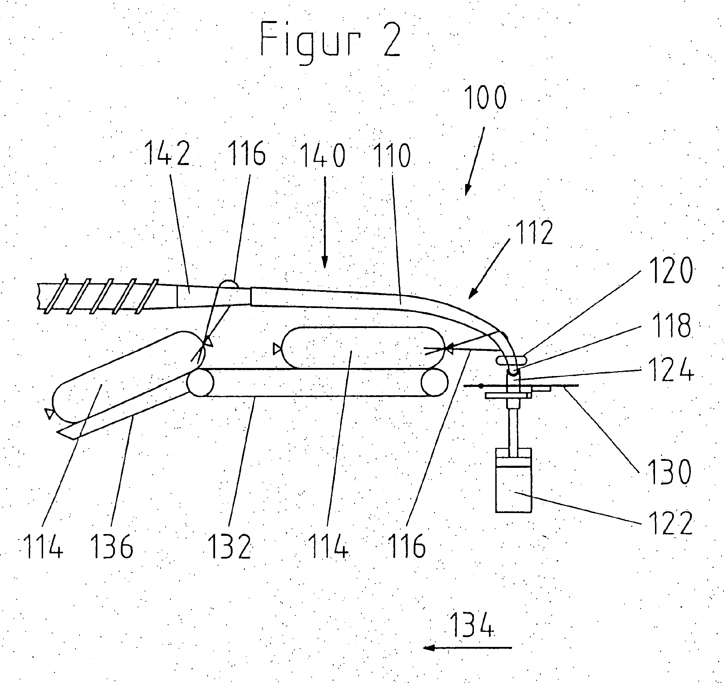

Unterhalb der Dornspitze 118 ist ein mittels eines Pneumatikzylinders 122 angetriebener Bolzen 124 gezeigt. Dieser weist an seiner Kontaktfläche 126 eine kugelpfannenförmige Zentrierung auf, in die die kugelsegmentförmige Dornspitze 118 hineinpasst, wenn der Bolzen 124 durch den Pneumatikzylinder 122 nach oben gefahren wird, siehe Fig. 2. Dabei wird die Dornspitze 118 zentriert. Zugleich durchsetzt der Bolzen 124 beim Hochfahren eine mittels einer Schlaufenzuführung 128 zugeführte Schlaufe 130, die durch den Formschluss zwischen dem Bolzen 124 und der Dornspitze 118 zwangsgeführt ist und nicht mehr von dem Dorn 110 abrutschen kann.

Seitlich unterhalb des Doms 110 befindet sich bei der gezeigten Ausführungsform ein Transportband 132 und in der durch einen Pfeil 134 gekennzeichneten Transportrichtung dahinter einer Rutsche 136.

Nachfolgend wird die Funktionsweise der hier gezeigten Ausführungsform der Schlaufenaufnahme 100 beschrieben. Die mittels der Schlaufenzuführung 128 zugeführten Schlaufen 130 sind typischerweise auf einem Halte- und Transportband 138 fixiert, welches zusammen mit den Schlaufen mittels der Schlaufenzuführung 128 schrittweise nacheinander in eine Position senkrecht unterhalb des Dorns 110 befördert wird. Befindet sich die Schlaufe 130 in dieser Position wird der Bolzen 124 nach oben gefahren, bis er mit seiner Kontaktfläche 126 mit der Dornspitze 118 in Kontakt tritt. Zugleich füllt eine in Transportrichtung 134 vorgeschaltete (nichtgezeigte) Füllmaschine schlauchartiges, einseitig verschlossenes Verpackungsmaterial, so dass sich in Transportrichtung eine Wurst bildet. Am Ende dieses Füllvorgangs wird auf einem füllgutfreien Zopfabschnitt mittels einer der Füllmaschinen nachgeschaltete (ebenfalls nicht dargestellten) Verschließmaschine ein Clip gesetzt, der zugleich die zugeführte, in der zentralen Position befindliche Schlaufe durchsetzt und sie somit an dem Zopfabschnitt befestigt. Danach wird das Verpackungsmaterial an dem Zopfabschnitt durchtrennt, und die Wurst, die beim Füllen mit ihrem in Transportrichtung 134 vorderen Ende auf den Transportband 132 zuliegen kommt, wird in die Transportrichtung 134 bewegt. Dadurch wird die Schlaufe entlang der durch den abgewinkelten vorderen Bereich 112 des Dorns 110 gebildeten Kurve zunächst ein Stück nach oben und dann in Transportrichtung 134 auf den Dorn 110 aufgezogen. Wenn die Wurst 114 das Ende des Transportbandes 132 erreicht, rutscht sie über die Rutsche 136 der Schwerkraft folgend ab, wodurch die Schleife 116 von einem hinteren Bereich 140 des Dorns 110 beispielsweise, wie hier gezeigt, auf eine sich daran anschließende Transportwelle 142 aufgezogen wird.

Da sich die Welle 142 zum Weitertransport der daran hängenden Wurst 114 dreht, der Dorn 110 jedoch feststeht, muss dieser einerseits an der Welle 142 drehbar angelenkt sein und andererseits zum Verhindern des Mitdrehens abgestützt werden.

Die Drehmomentabstützung erfolgt über die erwähnte Gabel 120, die im Bereich der Dornspitze 118 den Dorn umgreifend angeordnet ist wie in Fig. 4 zu sehen ist. Befindet sich der Bolzen 124 in der dornspitzfernen zweiten Stellung, die in Fig.3 dargestellt ist, liegt die Dornspitze 118 in Drehrichtung an einem der beiden Schenkel der Gabel 120 an. Wird der Bolzen 124 in die erste Stellung gebracht, in der er mit der Dornspitze 118 in Eingriff ist, bewirkt dies eine Zentrierung des Doms so dass dieser sich, wie in Fig. 4 gezeigt ist, in der Mitte zwischen den beiden Schenkeln der Gabel 120 befindet. Der aufgrund der gewählten Breite der Gabelspreizung zwischen der Dornspitze 118 und den Gabelschenkelh beiderseits entstehende Spalt ist groß genug, damit die zugeführte Schlaufe 130 entlang der Dornspitze 118 nach oben geführt werden kann. Dabei sorgen die beiden Rundungen 152, 154 auf gebogenen offenen Ende der Gabel 120 für eine trichterförmige Aufweitung der Gabel, so dass die zugeführte Schlaufe 130 beim Hochziehen über den Dorn 118 zentriert wird und nicht über die Gabelenden nach außen gleitet und ungewollt einfädelt.

Zur drehbaren Anlenkung des Dorns 110 weist dieser an seinem hinteren Ende (abführseitiges Ende) eine in einer ersten Bohrung 160 eingelassene, teilelastische Kugelpfanne 162 als Element zur Sicherung gegen eine axiale Relativbewegung zwischen dem Dorn 110 und der Welle 142 auf. Ferner sind in eine zweite Bohrung 164 Gleit- oder Rollenlager 166 koaxial zur Zentralachse 150 des Doms 110 als Drehlagerelement eingelassen. Als Gegenstück hierzu ist die Welle 142 an ihrem zuführseitigem Ende mit einem zylindrischen Abschnitt 168 zur radialen Lagerung und am äußersten zuführseitigen Ende mit einer Kugel 170 versehen, die als Gegenstück in die teilelastische Kugelpfanne 162 einrastet und somit den Dorn 110 gegen eine axiale Relativbewegung sichert. Andere Formen von Drehlagern und axialen Sicherungen können ebenso vorgesehen werden. Insbesondere kann die Anordnung der Elemente zwischen Aufnehmer und Welle auch vertauscht erfolgen, so dass der Aufnehmer mit einem entsprechenden zylindrischen Abschnitt als Drehlagerelement und mit einer Kugel als Element zur Sicherung gegen eine axiale Relativbewegung versehen ist.

In Fig.1 ist zu erkennen, dass der Dorn 110 in seinem Querschnitt von seinem vorderen Bereich 112 in Transportrichtung 134 bis zu seinem hinteren Bereich 140 anwächst. Dadurch wird erreicht, dass der Durchmesser am hinteren Ende des Dorns einerseits groß genug ist, um die Lager 166, 162 einzusetzen. Andererseits fällt die aufgezogene Schlaufe 116 auf ihrem Weg in Transportrichtung von dem größeren Umfang des Doms 110 auf den kleineren Umfang der sich anschließenden Welle 142 und bleibt somit im Bereich des Übergangs nicht beispielsweise an einem Absatz in Transportrichtung hängen. In einer abgewandelten Ausführungsform kann der Querschnitt der Dorns an seinem hinteren Ende auch genauso groß wie der der sich daran anschließenden Welle ausgestaltet sein.

## Patentansprüche

1. Vorrichtung zum Aufnehmen und Führen von an Gegenständen (114), insbesondere wurstförmigen Verpackungen, anbringbaren Schlaufen (116, 130) oder dergleichen mit
einer Schlaufenzuführung (128),
einem ein vorderes Ende (118) aufweisenden, abgewinkelten Aufnehmer (100),
einem eine Kontaktfläche (126) aufweisenden Bolzen (124), der zwischen einer ersten, die zugeführte Schlaufe (116, 130) durchsetzenden Stellung, in der die Kontaktfläche (126) mit dem vorderen Ende (118) des Aufnehmers (100) in Berührung ist, und einer zweiten, dem vorderen Ende (118) des Aufnehmers (100) fernen Stellung bewegbar ist, und
mit einem Antrieb (122) zur Betätigung des Bolzens (124),
**dadurch gekennzeichnet, dass** eine Drehmomentabstützung (120) im Bereich des vorderen Endes des Aufnehmers (100) vorgesehen ist, und die Kontaktfläche (126) des Bolzens (124) Mittel zur Zentrierung des Aufnehmers (100) aufweist, dergestalt, dass der Aufnehmer (100) nicht an der Drehmomentabstützung (120) anliegt, wenn der Bolzen (124) sich in der ersten Stellung befindet.

2. Vorrichtung nach Anspruch 1,
**dadurch gekennzeichnet, dass** die Drehmomentabstützung (120) durch eine den Aufnehmer (100) im Bereich dessen vorderen Endes (118) umgreifende Gabel mit einer Spreizung gebildet wird, deren Form und Breite so gewählt sind, dass der Aufnehmer (100) nicht an der Gabel anliegt, wenn der Bolzen (124) sich in der ersten Stellung befindet.

3. Vorrichtung nach Anspruch 1 oder 2,
**dadurch gekennzeichnet, dass** die Drehmomentabstützung (120) zwischen einer ersten Stellung in Anlage mit dem Aufnehmer (100) und einer zweiten Stellung beabstandet zu dem Aufnehmer (100) bewegbar ist.

4. Vorrichtung nach Anspruch 3,
**dadurch gekennzeichnet, dass** die Drehmomentabstützung (120) an den Bolzen (124) gekoppelt ist dergestalt, dass sie mit dem Bolzen (124) zwischen der ersten und zweiten Stellung bewegbar ist, wobei der Aufnehmer (100) an der Position, in der sich die Gabel (120) befindet, während der Bolzen (124) die erste Stellung erreicht hat, einen geringeren Querschnitt als die Breite der Gabelspreizung aufweist und an der Position, in der sich die Gabel (120) befindet, während der Bolzen (124) die zweite Stellung erreicht hat, einen der Breite der Gabelspreizung entsprechenden Querschnitt aufweist.

5. Vorrichtung nach Anspruch 3,
**dadurch gekennzeichnet, dass** die Drehmomentabstützung (120) mit dem Bolzen (124) um eine gemeinsame Drehachse dergestalt schwenkbar gelagert ist, dass der Bolzen (124) sich in der ersten Stellung befindet, während die Drehmomentabstützung (120) von dem Aufnehmer (100) weggeschwenkt ist, und dass der Bolzen (124) sich in der zweiten Stellung befindet während die Drehmomentabstützung (120) an den Aufnehmer (100) herangeschwenkt ist.

6. Vorrichtung nach einem der Ansprüche 1 bis 5,
**dadurch gekennzeichnet, dass** das vordere Ende des Aufnehmers (100) kugelsegmentförmig und die Kontaktfläche (126) kugelpfannenförmig ausgebildet ist.

7. Vorrichtung nach einem der Ansprüche 1 bis 5,
**dadurch gekennzeichnet, dass** das vordere Ende des Aufnehmers (100) kegelförmig und die Kontaktfläche (126) trichterförmig ausgebildet ist.

8. Vorrichtung nach einem der Ansprüche 1 bis 7,
**dadurch gekennzeichnet, dass** der Aufnehmer (100) (Dorn) einen im Wesentlichen runden Querschnitt aufweist, der sich von dem vorderen Ende (118) (Dornspitze) in Richtung auf das diesem entgegengesetzte hintere Ende (dornspitzfernes Ende) hin aufweitet.

9. Vorrichtung nach Anspruch 8,
**dadurch gekennzeichnet, dass** der Aufnehmer (100) an seinem hinteren Ende ein zu seiner Zentralachse (150) koaxiales Drehlagerelement (164, 166) aufweist.

10. Vorrichtung nach Anspruch 9,
**dadurch gekennzeichnet, dass** das koaxiale Drehlagerelement (164, 166) ein Element (160, 162) zur Sicherung gegen eine axiale Relativbewegung aufweist.

11. Vorrichtung nach Anspruch 1,
**dadurch gekennzeichnet, dass** ein Transportband (138) dergestalt angeordnet ist, dass die Schlaufen (116, 130) über den Aufnehmer (100) in Richtung dessen hinteren Endes gezogen werden, während die an den Schlaufen (116) hängenden Gegenstände (114) auf dem Transportband (138) abtransportiert werden.

12. Vorrichtung nach Anspruch 1,
**dadurch gekennzeichnet, dass** eine Rutsche (136) dergestalt angeordnet ist, dass die Schlaufen (116, 130) über den Aufnehmer (100) in Richtung dessen hinteren Endes gezogen werden, während die an den Schlaufen (116) hängenden Gegenstände (114) auf der Rutsche (136) abwärts gleiten.

## Claims

1. A device for holding and guiding loops (116; 130) or the like that are attachable to objects (114), in particular to sausage-shaped packaging, comprising
a loop feeder (128),
an angled holder (100) with a front end (118),
a bolt (124) with a contact surface (126), the bolt (124) being movable between a first position passing through the fed loop (116; 130), in which position the contact surface (126) comes into contact with the front end (118) of the holder (100), and a second position distal from the front end (118) of the holder (100), and having a drive (122) for actuating the bolt (124),
**characterized in that** a torque stabilizer (120) is provided in the region of the front end of the holder (100), and that the contact surface (126) of the bolt (124) has means for aligning the holder (100) such that the holder (100) does not abut the torque stabilizer (120) when the bolt (124) is in the first position.

2. A device according to claim 1,
**characterized in that** the torque stabilizer (120) is formed by a forked bracket encircling the holder (100) at its front end (118) with a spread of selected shape and width such that the holder (100) does not abut the forked bracket when the bolt (124) is in the first position.

3. A device according to claim 1 or 2,
**characterized in that** the torque stabilizer (120) is movable between a first position abutting the holder (100) and a second position spaced apart from the holder (100).

4. A device according to claim 3,
**characterized in that** the torque stabilizer (120) is coupled to the bolt (124) in such a way that it is movable with the bolt (124) between the first and second position, the holder (100) having a smaller cross-section than the width of the forked bracket spread where the forked bracket (120) is located when the bolt (124) has reached the first position, and having a cross-section equal to the width of the forked bracket spread where the forked bracket is located when the bolt (124) has reached the second position.

5. A device according to claim 3,
**characterized in that** the torque stabilizer (120) is pivotably mounted about a common axis with the bolt (124) in such a way that the bolt (124) is in the first position when the torque stabilizer (120) is pivoted away from the holder (100), and that the bolt (124) is in the second position while the torque stabilizer (120) is pivoted towards the holder (100).

6. A device according to one of claims 1 to 5,
**characterized in that** the front end of the holder (100) is in the shape of a spherical segment and the contact surface (126) is in the shape of a ball socket.

7. A device according to one of claims 1 to 5,
**characterized in that** the front end of the holder (100) is spherical in shape and the contact surface (126) is funnel-shaped.

8. A device according to one of claims 1 to 7,
**characterized in that** the holder (100) (rod) has a substantially rounded cross-section that enlarges from the front end (118) (rod tip) in the direction of the opposite back end (the distal end from the rod tip).

9. A device according to claim 8,
**characterized in that** the holder (100) includes at its back end a rotary bearing assembly (164, 166) arranged coaxially with its central axis (150).

10. A device according to claim 9,
**characterized in that** the coaxial rotary bearing assembly (164, 166) includes a member (160, 162) for preventing relative axial movement.

11. A device according to claim 1,
**characterized in that** a conveyor belt (138) is arranged in such a way that the loops (116, 130) are pulled over the holder (100) in the direction of its back end when the objects (114) hanging from the loops (116) on the conveyor belt (138) are transported away.

12. A device according to claim 1,
**characterized in that** a chute (136) is arranged in such a way that the loops (116, 130) are pulled over the holder (100) in the direction of its back end when the objects (114) hanging from the loops (116) slide downwards on the chute (136).

## Revendications

1. Dispositif pour recevoir et pour guider des boucles (116, 130) ou des éléments comparables sur des objets (114), en particulier des emballages en forme de saucisse, comportant un acheminement de boucles (128),
un récepteur (100) coudé comportant une extrémité avant (118),
un tourillon (124) muni d'une surface de contact (126) et mobile entre une première position qui traverse la boucle (116, 130) acheminée et dans laquelle la surface de contact (126) est en contact avec l'extrémité avant (118) du récepteur (100) et une deuxième position éloignée de l'extrémité avant (118) du récepteur (100) et
un entraînement (122) destiné à actionner le tourillon (124),
**caractérisé en ce qu'**un appui de couple de rotation (120) est prévu dans la zone de l'extrémité avant du récepteur (100) et que la surface de contact (126) du tourillon (124) présente des moyens pour centrer le récepteur (100) de telle manière que le récepteur (100) ne touche pas l'appui de couple de rotation (120) quand le tourillon (124) se trouve dans la première position.

2. Dispositif selon la revendication 1, **caractérisé en ce que** l'appui de couple de rotation (120) est formé par une fourche qui entoure le récepteur (100) dans la zone de son extrémité avant (118) et dont l'écartement a une forme et une largeur choisies de telle manière que le récepteur (100) ne touche pas la fourche quand le tourillon (124) se trouve dans la première position.

3. Dispositif selon la revendication 1 ou 2, **caractérisé en ce que** l'appui de couple de rotation (120) est mobile entre une première position en contact avec le récepteur (100) et une deuxième position à distance du récepteur (100).

4. Dispositif selon la revendication 3, **caractérisé en ce que** l'appui de couple de rotation (120) est couplé au tourillon (124) de telle manière qu'il peut être déplacé à l'aide du tourillon (124) entre la première et la deuxième position, le récepteur (100) ayant une section transversale inférieure à la largeur de l'écartement de la fourche à l'endroit où se trouve la fourche (120) lorsque le tourillon (124) a atteint la première position et une section transversale qui correspond à la largeur de l'écartement de la fourche à l'endroit où se trouve la fourche (120) lorsque le tourillon (124) a atteint la deuxième position.

5. Dispositif selon la revendication 3, **caractérisé en ce que** l'appui de couple de rotation (120) ainsi que le tourillon (124) sont montés de manière à basculer autour d'un axe de rotation commun de telle manière que le tourillon (124) se trouve dans la première position lorsque l'appui de couple de rotation (120) est éloigné du récepteur (100) et que le tourillon (124) se trouve dans la deuxième position lorsque l'appui de couple de rotation (120) est rapproché du récepteur (100.)

6. Dispositif selon l'une des revendications 1 à 5, **caractérisé en ce que** l'extrémité avant du récepteur (100) est en forme de secteur sphérique et la surface de contact (126) en forme de coussinet sphérique.

7. Dispositif selon l'une des revendications 1 à 5, **caractérisé en ce que** l'extrémité avant du récepteur (100) a la forme d'un cône et la surface de contact (126) la forme d'un entonnoir.

8. Dispositif selon l'une des revendications 1 à 7, **caractérisé en ce que** le récepteur (100) (broche) a une section transversale pratiquement circulaire qui s'élargit depuis l'extrémité avant (118) (pointe de broche) en direction de l'extrémité arrière qui lui est opposée (extrémité éloignée de la pointe de broche).

9. Dispositif selon la revendication 8, **caractérisé en ce que** le récepteur (100) comporte à son extrémité arrière un élément de coussinet de pivotement (164, 166) coaxial à son axe central (150).

10. Dispositif selon la revendication 9, **caractérisé en ce que** l'élément de coussinet de pivotement (164, 166) coaxial comporte un élément (160, 162) pour empêcher un mouvement relatif axial.

11. Dispositif selon la revendication 1, **caractérisé en ce qu'**une bande transporteuse (138) est disposée de telle manière que les boucles (116, 130) sont passées au-dessus du récepteur (100) en direction de son extrémité arrière lorsque les objets (114) accrochés par les boucles (116) sont transportés sur la bande transporteuse (138).

12. Dispositif selon la revendication 1, **caractérisé en ce qu'**une glissière (136) est disposée de telle manière que les boucles (116, 130) sont passées au-dessus du récepteur (100) en direction de son extrémité arrière lorsque les objets (114) accrochés par les boucles (116) descendent sur la glissière (138).
